# EUROPEAN PATENT APPLICATION

(11) **EP 2 250 925 A1**
(43) Date of publication of application: **17.11.2010**
(21) Application number: 09159309.5
(22) Date of filing: 04.05.2009
(51) Int. Cl.: A47B 9/12, A47B 9/02

(54) **Adjustable table support comprising a spring actuator**

(71) Applicant: ROL Ergo AB, 550 09 Jönköping (SE)
(72) Inventor: Gustavsson, Hans, 563 31, Gränna (SE)
(74) Representative: Jacobsson, Peter

(57) **Abstract**

The present invention concerns an adjustable table support comprising a lower support part (11, 12) and an upper support part (20), which is vertically displaceable with respect to the lower support part. The adjustable table support further comprises a spring actuator (30) having a first end (30a) and a second end (30b); and a force transfer system (40, 50, 41, 42, 43, 44) connected to the upper support part and the lower support part. The force transfer system is arranged to transfer a force generated by the spring actuator from the spring actuator (30) to the table support, such that the force of the spring actuator contributes in displacement of the upper support part with respect to the lower support part. The first end (30a) of the spring actuator (30) is fixedly arranged to the upper support part (20) and the second end (30b) of the spring actuator is connected to the lower support part (11, 12) via the force transfer system.

## Description

### Technical Field

The present disclosure relates to an adjustable table support comprising a lower support part, an upper support part, which is vertically displaceable with respect to the lower support part and a spring actuator for contributing to the displacement of the upper support part with respect to the lower support part.

### Background

Height-adjustable tables generally comprise an adjustable table support with a lower support part and an upper support part that is vertically adjustable with respect to the lower support part. Onto the upper support part a table top is arranged, which is adapted to receive objects of different sizes and weights. In certain kinds of adjustable table supports, as described in e.g. US5682825, US6220185 and US4898103, a spring leg is connected to the lower support part and the upper support part such that the force of the spring leg is used for carrying the weight of the upper support part, including table top and any possible devices arranged onto the table top, such as a computer screen. In US 6220185 the spring leg is coupled with its one end in a fixed manner to the lower support part and with its other end in an adjustable manner against a spring leg base to thereby be able to vary the pretension of the spring. The spring leg base can be locked into different positions matching different loads on the table top by means of an adjusting device. The force of the spring leg is transmitted to the upper support part via a steel cable attached to the upper support part.

In the height-adjustable tables described in prior art, the lower support part has a transversal member extending from the first leg to the second leg. Such a transversal member could be troublesome for a user of the table, since the transversal member may be in the way for the user's legs, when the user is sitting or standing by the table. This is especially true for tall users having long legs.

### Summary

It is an object of the present invention to provide an improved solution that alleviates the mentioned drawbacks with present devices.

Furthermore, it is an object to provide an adjustable table support having a spring actuator in which a transversal member extending from the first leg to the second leg can be avoided.

Another object is to provide a vertically adjustable table support having a spring actuator in which the spring actuator follows the displacement of the upper support part in relation to the lower support part.

The object is achieved by an adjustable table support according to the preamble of claim 1, wherein the first end of said spring actuator is fixedly arranged to the upper support part and wherein the second end of the spring actuator is connected to the lower support part via a force transfer system.

By attaching one end of the spring actuator to the upper support part and connecting the other end of the spring actuator to the lower support part via a force transfer system, such as a wire system, it is possible for the spring actuator to follow the movement, or displacement, of the upper support part, and thereby a transversal member extending between the legs of the lower support part can be omitted. Consequently, there will be more space for the legs of a user of a table equipped with such an adjustable table support.

A spring actuator is defined as a device that exerts a force in its linear direction through an inside pressure. E.g. a gas spring or gas damper, or similar, e.g. any kind of spring using a cylinder filled with a pressurised medium. Alternatively, the spring actuator may be a mechanical spring, such as a coil spring.

According to an embodiment of the invention, the force transfer system comprises a tensile means, such as a wire system, having a first end connected to the second end of the spring actuator and a second end fixedly arranged to the lower support part. Since the force transfer system comprises a tensile means arranged with one end to the spring actuator, which in turn is arranged to the upper support part, and the other end to the lower support part, the upper support part will move in relation to the lower support part when the spring actuator expands or contracts. Since the force of the spring actuator is thereby transferred via the tensile means, the spring actuator thus contributes to the displacement of the upper support part in relation to the lower support part.

A tensile means is defined as a means that can be exposed to and that can receive tensile forces, such as a metal wire.

According to another embodiment of the invention, the force transfer system further comprises at least one deflecting roller fixedly arranged to the upper support part, and wherein the tensile means extends via the at least one deflecting roller such that the tensile means is deflected from a generally horizontal direction to a generally vertical direction. Thereby, the force generated from the spring actuator can be transferred from a horizontal direction to a vertical direction.

According to yet another embodiment of the invention, the lower support part comprises a first leg and a second leg, and wherein the tensile means is fixedly arranged to each of the first leg and the second leg, and wherein the tensile means extends from the first leg to the second leg across the upper support part. Thereby, the upper support part will move synchronously in relation to each of the legs of the lower support part.

According to still another embodiment, the spring actuator is arranged in a substantially horizontal plane. Thereby, the arrangement can be provided in a vertically limited space.

According to another embodiment, the adjustable table support further comprises an exchange wheel having a first core with a first diameter and a second core with a second diameter that is larger than the first diameter, wherein the tensile means, in a direction from its first end, extends into the exchange wheel via the first core and out of the exchange wheel via the second core. Thereby, a small movement of the second end of the spring actuator would result in a larger movement of the upper support part in relation to the lower support part, via the tensile means. The higher the diameter difference between the cores, the larger the difference in movement. Thereby, a small movement of the spring actuator results in a large movement of the upper support part in relation to the lower support part. Also, by carefully selecting the first and the second diameter, a suitable force is achieved from the spring actuator and at the same time the end areas of the spring actuator, i.e. when the spring actuator is almost fully compressed or extended, are not used. There is a risk that the spring actuator does not perform linearly in the end areas. By avoiding using the end areas of the spring actuator, the spring actuator will have a linear performance and the experience of the force necessary for lowering or raising the upper support part in relation to the lower support will be the same, irrespective of whether the upper support part is in a low or high position.

According to yet another embodiment, the upper support part has two co-operating parts arranged for telescopic movement in relation to the lower support part, and a connection part connecting the two co-operating parts. Further, the spring actuator is arranged at the connection part of the upper support part. Thereby, the spring actuator and arrangements connected to the spring actuator are placed in an ergonomically advantageous way, since the spring actuator follows the movement of the upper support part and consequently a table top arranged onto the upper support part. Consequently, no horizontal cross-bar, limiting leg space for a user of the table support is necessary. Furthermore, if the spring actuator is horizontally positioned, the connection part of the upper support part can have a rather small vertical extension, giving even more space for a user below the table support.

According to still another embodiment, the connection part of the upper support part has a recess for receiving the spring actuator. By arranging the connection part of the upper support with a recess such that the spring actuator can be arranged in the recess, the spring actuator and arrangements connected to the spring actuator can be hidden from the user and from the surrounding environment. Thereby, there will be less wear on the spring actuator and its connected arrangements. Further, there is less risk that a user may accidentally come in contact with the spring actuator.

The adjustable table support may further comprise a locking device for preventing the displacement of the upper support part to the lower support part, wherein the locking device comprises a clip for locking the tensile means. Hereby, the upper support part can be locked in a position selected by the user. Consequently, a safe and reliable table support is achieved.

According to an embodiment, the deflecting rollers each has a groove for receiving the tensile means, and the clip of the locking device is arranged to lock the tensile means by pressing the deflecting roller such that the tensile means is locked in the groove of the deflecting roller. Hereby, a simple, reliable and efficient locking mechanism is achieved.

### Brief Description of the Drawings

The invention will in the following be described in more detail with reference to the enclosed drawings, wherein:
Fig 1 is a perspective view of an adjustable table support according to the invention;
Fig 2a is a perspective close-up view of a detail of the adjustable table support of fig. 1.
Fig 2b is a side-view of the detail of fig. 2a.
Fig 3a is a top view of an adjustable table support according to the invention with a spring actuator adjustment means in a first position;
Fig 3b is a top view of an adjustable table support according to the invention with a spring actuator adjustment means in a second position.

### Description of Embodiments

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

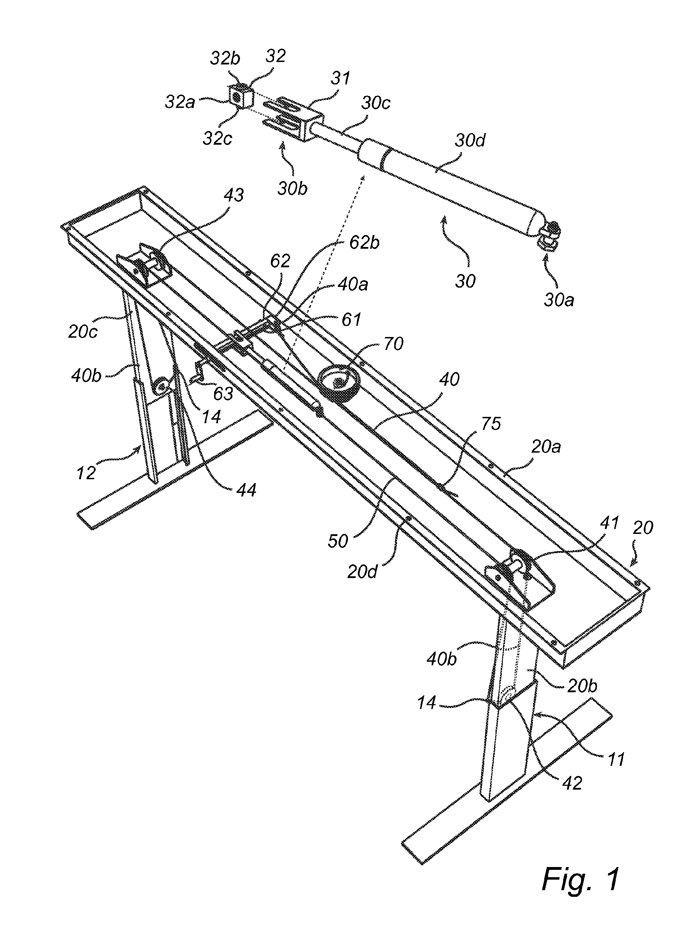

Fig. 1 shows an adjustable table support according to the invention, comprising a lower support part 11, 12 with two separate legs: a left leg 12 and a right leg 11, and an upper support part 20. The upper support part 20 has two co-operating parts for co-operating with the lower support part: a left co-operating part 20c and a right co-operating part 20b, and a connection part 20a that connects the two co-operating parts 20b, 20c. The co-operating parts are arranged to co-operate with the lower support part such that the parts can perform a telescopic movement in relation to each other. More specifically, each leg 11, 12 of the lower support part is arranged to cooperate with one of the co-operating part 20b, 20c of the upper support part, the left leg 12 with the left co-operating part 20c and the right leg 11 with the right co-operating part 20b, such that a telescopic movement can take place between the upper support part and the lower support part. The co-operating parts 20b, 20c have a generally vertical extension and the connection part 20a has a generally horizontal extension, when the adjustable table is arranged on a generally horizontal surface. For facilitating the telescopic movement, the adjustable table support may be equipped with a telescopic column and/or a telescopic arrangement as described in co-pending European Patent Application 09153948.6 from the same applicant.

The connection part 20a of the upper support part is arranged on top of the co-operating parts 20b, 20c. The connection part 20a is shaped as a housing for receiving a spring actuator. For this reason, the connection part 20a of the upper support part has a generally horizontal bottom surface, and four side surfaces extending substantially perpendicular to the bottom surface, but no top surface. Consequently, the connection part 20a forms a recess for receiving the spring actuator. The recess is also arranged to receive arrangements connected to the spring actuator, as can be seen in figure 1. Further, the connection part 20a of the upper support part has a generally horizontal top surface extending from an upper edge of the side surfaces. The top surface is arranged to receive a table top. When a table top is arranged onto the top surface, the spring actuator will be hidden in the recess formed by the connection part of the upper support part. Further, the top surface is provided with a number of holes 20d for receiving a fastening means, such as a screw, for fastening a table top to the table support.

The adjustable table support has a spring actuator 30 having a piston 30c and a cylinder 30d, e.g. a gas spring that is arranged to contribute to the telescopic movement of the upper support part 20 in relation to the lower support part 10. The spring actuator 30 is horizontally arranged at the connection part 20a of the upper support part. For this reason, a first end 30a of the spring actuator 30 is fixedly, but rotatably, arranged to the upper support part 20. The other end, a second end 30b, of the spring actuator 30 is connected to a spring support 62. The spring support 62 is rotatably arranged with a first end 62a to the upper support part 20. The other end 62b of the spring support is connected to the lower support part 10 by means of a tensile means 40, 50 e.g. a wire system. The tensile means 40, 50 has a first end 40a, which is arranged to the other end 62b of the spring support. The tensile means passes from its first end 40a via an exchange wheel 70, and a number of deflecting rollers 41, 43 through holes in the connection part 20a of the upper support part, further via guide rollers 42, 44 to the lower support part where it is fixedly arranged to the lower support part. More precisely, the tensile means 40, 50 is fixedly arranged to a stud 14 that in turn is fixedly arranged at each of the legs 11, 12 of the lower support part.

The deflecting rollers 41, 43 are arranged to the connection part 20a of the upper support part, at each end of the upper support part, above the right, and the left co-operating parts 20b, 20c, respectively. The tensile means 40, 50 extends via the deflecting rollers 41, 43 in such a way that the tensile means is deflected from a generally horizontal direction along the generally horizontally arranged connection part 20a of the upper support part to a generally vertical direction along the generally vertically arranged co-operating parts 20b, 20c of the upper support part. When the upper support part 20 is displaced in relation to the lower support part 11, 12, the tensile means moves onto the deflecting rollers 41, 43, in grooves of the deflecting rollers.

The movements of the tensile means 40, 50 correspond to a pivoting movement of the spring support 62 around its first end 62a to make the piston of the spring actuator move out of or into the cylinder. The table support is so arranged that when the upper support part is moving upwards the piston 30c moves out of the cylinder 30d to thereby contribute to the upwards movement of the upper support part 20 . Similarly, when the upper support part moves downwards, the piston 30c moves into the cylinder 30d and the force thereby generated will counteract the downwards movement of the upper support part.

The tensile means 40, 50 comprises a first part 40 and a second part 50. The first part 40 is connected with its first end 40a to the spring support 62 and with its second end to the second part 50 of the tensile means at a connection point 75. The connection point 75 is situated between the first end 40a of the tensile means and the right deflecting roller 41. The connection point 75 is selected such that the connection point will not enter the right deflecting roller 41, even if the upper support part enters its upward most level. The second part 50 of the tensile means functions as a synchronisation means for synchronizing the movement of the upper part with respect to the left and the right leg. The second part 50 of the tensile means also serves together with the first part 40 as a force transfer means for transferring the force from the spring actuator 30 to a contribution to the horizontal movement of the upper support part.

The second part 50 of the tensile means has two sub-parts. The first sub-part extends from the stud 14 at the right leg 11 of the lower support part, following the right co-operating part 20b of the upper support part upwards via the first deflecting rollers 41, 43 and across the connection part 20a of the upper support part and further down following the left co-operating part 20c of the upper support part towards and around a left guide roller 44 arranged in the lower part of the left co-operating part 20c towards a stud 14 of the left leg 12 where it is fixedly arranged to the stud 14 of the left leg. The second sub-part of the second part 50 of the tensile means further extends from the stud 14 of the left leg 12 upwards following the left co-operating part 20c of the upper support part and via the left deflecting roller 43 across the connection part 20a of the upper support part and via the right deflecting roller 41 downwards following the right co-operating part 20b of the upper support part towards and around a right guide roller 42 arranged in the lower part of the right co-operating part 20c towards the stud 14 of the right leg where its is fixedly arranged. By such an arrangement, the movement of the upper support part in and out of the right and the left leg will be synchronized in relation to the legs.

Alternatively, the first part of the tensile means 40 and the second part of the tensile means 50 could be arranged as separate tensile means. In that case, the first part of the tensile means would function as a force transfer means, extending from its first end 40a via the deflecting rollers towards the lower support part where it would be fixedly attached. Similarly, the second part 50 of the tensile means would function as a synchronization means synchronizing the movement of the first and second leg. The second part 50 of the tensile means is connected to both legs 11, 12 of the lower support part and to the upper support part via e.g. deflecting rollers of the upper support part, as described above. Although, by connecting the first part 40 to the second part 50 at a connection point 75, as described earlier, less wire has to be used compared to this alternative solution, and a cost-efficient solution is achieved.

The deflecting rollers 41, 43 each has two wheels connected with a wheel shaft rotatably arranged to the upper support part. The wheel shaft has a generally horizontal extension. The wheels each have a groove arranged in its circumference for receiving and guiding the tensile means 40, 50.

The guide rollers 42, 44 are arranged in the lower part of the left co-operating part 20b and the right co-operating part 20c of the upper support part, respectively. The guide rollers 42, 44 functions to maintain a tension in the tensile means 40, 50 when the upper support part moves upwards and downwards in relation to the lower support part. For this reason, each of the guide rollers is placed at a point of each co-operating part of the upper support part that is situated below the stud 14 of the legs 11, 12 of the lower support part, even when the upper support part is displaced in its uppermost position. Each of the guide rollers 42, 44 has a single wheel rotatably arranged to a generally horizontally arranged wheel shaft. Each of the wheels has a groove arranged in its circumference for receiving and guiding the tensile means 40, 50. Alternatively, the guide rollers are replaced by a pin or similar, over which the tensile means can pass.

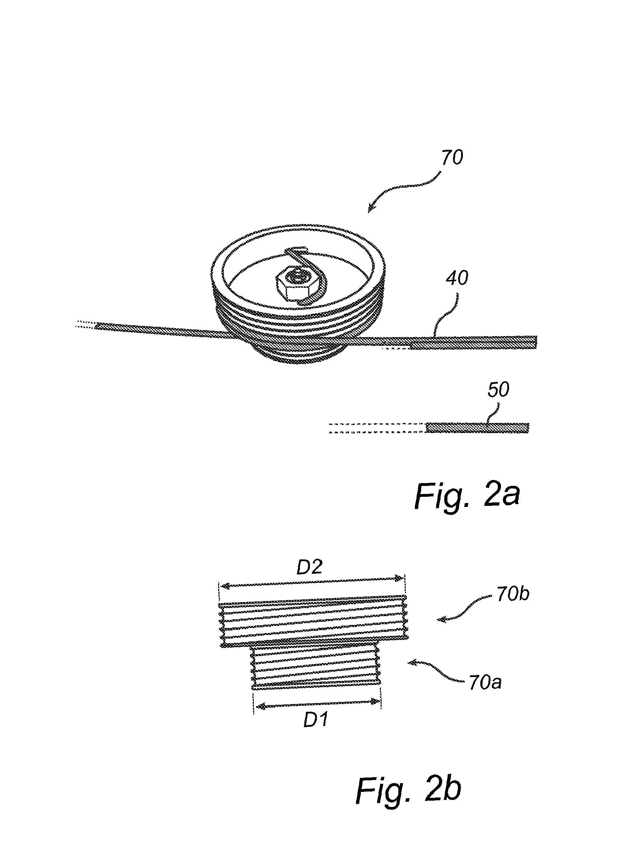

As shown in figure 1 and in more detail in figures 2a and 2b, the height adjustable table support may further comprise an exchange wheel 70. The exchange wheel 70 is rotatably connected to the connection part 20a of the upper support part. The exchange wheel has a first core 70a and a second core 70b, the first core has a diameter D1 that is smaller than the diameter D2 of the second core. In an embodiment D1 is 50 mm and D2 100 mm. The diameter difference of the first core and the second core is selected such that it is adapted to the force of the spring actuator, e.g. the pressure of the gas spring. The tensile means 40, in a direction from its first end 40a, enters the first core 70a and is coiled up counter-clockwise on the first core, the tensile means further proceeds through the exchange wheel and exits the exchange wheel via the second core 70b onto which it is wound up clockwise. By having a first core diameter that is smaller than the second core diameter, a pivoting movement of the spring support 62, resulting in a movement of the part of the wire 40 arranged between the exchange wheel and the spring support will result in a larger movement of the rest of the wire. Thereby, a small movement of the spring support will result in a large movement of the upper support part. The cores 70a, 70b of the exchange wheel are further provided with grooves in their circumference for guiding the tensile means when the tensile means is wound up on the core. The grooves are preferably arranged as threads. I.e. the cores are threaded. Thereby it is avoided that the tensile means crosses itself on the core when it is wound up.

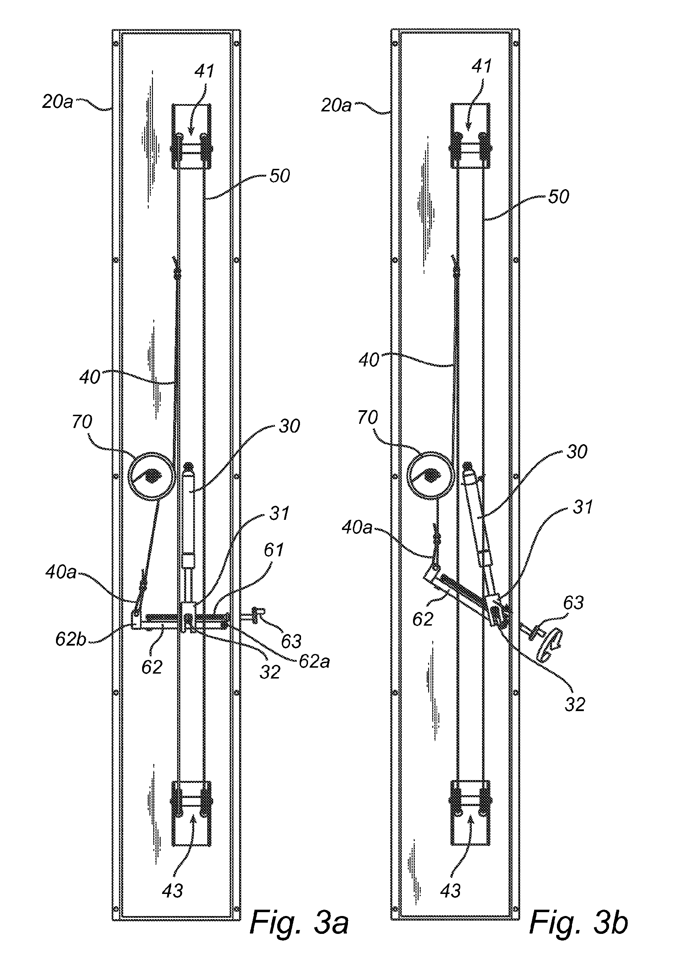

The adjustable table support shown in the figures also comprises an adjustment means for adjusting the force of the spring actuator, see figure 1 and figs 3a, 3b that show how the force of the spring actuator is adjusted. The spring actuator 30 has in its second end 30b a fork 31 for receiving a nut 32. The nut has a head 32a and two ears 32b, 32c arranged on opposite sides of the head. The ears are adapted to fit between two legs of the fork 31. The head of the nut 32 has a hole provided with threads arranged to cooperate with a threaded screw 61 arranged in parallel to the spring support 62. At an end of the threaded screw close to the first end 62a of the spring support an adjusting device 63 in shape of a crank is arranged. Alternatively, the adjusting device 63 may be an electric motor driving the threaded screw. When the crank is turned, the nut moves onto the threaded screw and thereby the position of the second end 30b of the spring actuator can be changed. When the second end 30b of the spring actuator is positioned close to the first end 62a of the spring support and the upper part of the table support is displaced a certain distance in relation to the lower support part, the piston moves a short distance into the cylinder. Thereby, the force of the spring actuator 30 contributing to the displacement of the upper support part 10 with respect to the lower support part 11, 12 is small. On the other hand, when the second end 30b of the spring actuator is positioned close to the second end 62b of the spring support and the upper part of the table support is displaced a certain distance in relation to the lower support part, the piston moves a longer distance into the cylinder. Thereby, the force of the spring actuator 30 contributing to the displacement of the upper support part 10 with respect to the lower support part 11, 12 is high. Consequently, the force of the spring actuator contributing to the displacement of the upper support part can be varied by using the adjustment means 63 to change the position of the second end 30b of the spring actuator.

The adjustable table support is further provided with a locking device for preventing the displacement of the upper support part 20 to the lower support part 11, 12. The locking device comprises a clip for locking the tensile means 40, 50. According to an embodiment, the clip is arranged at any of the deflecting rollers 41, 43 or the guiding rollers 42, 44 and is arranged to press the roller such that the tensile means is locked in the groove of the rollers. Preferably, the clip is arranged at any of the deflecting rollers 41, 43. By making the groove v-shaped, the clip will be able to efficiently lock the tensile means in the groove. The deflecting rollers may be made of e.g. a plastic or metallic material. If the deflecting rollers are made of a plastic material, a good function of the locking means is facilitated.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. Adjustable table support comprising:
a lower support part (11, 12);
an upper support part (20), which is vertically displaceable with respect to the lower support part;
a spring actuator (30) having a first end (30a) and a second end (30b);
and
a force transfer system (40, 50, 41, 42, 43, 44) connected to the upper support part and the lower support part, the force transfer system being arranged to transfer a force generated by the spring actuator from the spring actuator (30) to the table support, such that the force of the spring actuator contributes in displacement of the upper support part with respect to the lower support part, **characterized in that** the first end (30a) of the spring actuator (30) is fixedly arranged to the upper support part (20) and **in that** the second end (30b) of the spring actuator is connected to the lower support part (11, 12) via the force transfer system.

2. The adjustable table support according to claim 1, wherein said force transfer system comprises:
a tensile means (40, 50), such as a wire system, having a first end (40a) connected to the second end (30b) of the spring actuator and a second end (40b) fixedly arranged to the lower support part (11, 12).

3. The adjustable table support according to claim 2, wherein the force transfer system further comprises:
at least one deflecting roller (41, 43) fixedly arranged to the upper support part, and wherein the tensile means (40, 50) extends via the at least one deflecting roller such that the tensile means is deflected from a generally horizontal direction to a generally vertical direction.

4. The adjustable table support according to any of claims 2-3, wherein the lower support part (11, 12) comprises a first leg (11) and a second leg (12), and wherein the tensile means (40, 50) is fixedly arranged to each of the first leg (11) and the second leg (12), and wherein the tensile means (40, 50) extends from the first leg to the second leg across the upper support part (20).

5. Adjustable table support according to any of the preceding claims, wherein the spring actuator (30) is arranged in a substantially horizontal plane.

6. The adjustable table support according to any one of the preceding claims, further comprising adjustment means (31, 32, 61, 62, 63) for adjusting the force transferred from the spring actuator (30) to the table support.

7. The adjustable table support according to claim 2 and 6, wherein the first end (40a) of the tensile means (40) of the force transfer system is connected to the second end (30b) of the spring actuator via the adjustment means (31, 32, 61, 62), and wherein the adjustment means is arranged to adjust the force transferred from the spring actuator to the table support by adjusting the position of the second end (30b) of the spring actuator in relation to the first end (40a) of the tensile means of the force transfer system.

8. Adjustable table support according to any of claims 2-7, further comprising:
an exchange wheel (70) having a first core (70a) with a first diameter and a second core (70b) with a second diameter that is larger than the first diameter, wherein the tensile means (40), in a direction from its first end (40a), extends into the exchange wheel via the first core (70a) and out of the exchange wheel via the second core (70b).

9. Adjustable table support according to any of the preceding claims, wherein the upper support part (20) has two co-operating parts (20b, 20c) arranged for telescopic movement in relation to the lower support part (11, 12), and a connection part (20a) connecting the two co-operating parts (20b, 20c).

10. Adjustable table support according to claim 9, wherein the spring actuator (30) is arranged at the connection part (20a) of the upper support part (20).

11. Adjustable table support according to claim 10, wherein the connection part (20a) of the upper support part (20) has a recess for receiving the spring actuator (30).

12. Adjustable table support according to any of claims 2-11, further comprising a locking device for preventing the displacement of the upper support part (20) to the lower support part (11, 12), wherein the locking device comprises a clip for locking the tensile means (40, 50).

13. Adjustable table support according to claim 12, wherein the deflecting rollers (41, 43) each has a groove for receiving the tensile means, and wherein the clip is arranged to lock the tensile means by pressing the deflecting roller such that the tensile means is locked in the groove of the deflecting roller.
